# EUROPEAN PATENT APPLICATION

(11) **EP 4 848 645 A1**
(43) Date of publication of application: **02.12.2026**
(21) Application number: 25751144.4
(22) Date of filing: 20.01.2025
(51) Int. Cl.: H04L 5/00

(54) **PUCCH TRANSMISSION METHOD AND APPARATUS, AND TERMINAL, NETWORK DEVICE AND MEDIUM**

(30) Priority: 08.02.2024 CN 202410176994
(71) Applicant: China Mobile Communication Ltd. Research Institute, Beijing 100053 (CN); CHINA MOBILE COMMUNICATIONS GROUP CO., LTD, Beijing 100032 (CN)
(72) Inventor: YANG, Tuo, Beijing 100032 (CN); WANG, Fei, Beijing 100032 (CN); KE, Ting, Beijing 100032 (CN); LI, Yan, Beijing 100032 (CN); SHEN, Xiaodong, Beijing 100032 (CN)
(74) Representative: GPI Brevets
(86) International application number: PCT/CN2025/073225
(87) International publication number: WO 2025/167542

(57) **Abstract**

The present disclosure is applied to the field of wireless technology. Provided are a PUCCH transmission method and apparatus, and a terminal, a network device and a medium. The method comprises: on the basis of first information, determining a transmission resource for transmitting a first PUCCH in a plurality of slots, wherein the first information comprises one or more pieces of the following information: first configuration information, which comprises a first configuration and/or a second configuration, the first configuration comprising at least two PUCCH parameter configurations, the at least two PUCCH parameter configurations each comprising one configuration parameter group, and the second configuration comprising one PUCCH parameter configuration, the PUCCH parameter configuration comprising at least two configuration parameter groups; and the type of a time-domain resource where the transmission of the first PUCCH is located.

## Description

### CROSS-REFERENCE TO RELATED APPLICATION

This application claims priority to Chinese Patent Application No. 202410176994.6 filed in China on February 8, 2024, the entire contents of which are incorporated herein by reference.

### TECHNICAL FIELD

The present disclosure relates to the field of wireless communications, and in particular, to a PUCCH transmission method and apparatus, a terminal, a network device, and a medium.

### BACKGROUND

SubBand non-overlapping Full Duplex (SBFD) combines the advantages of Time Division Duplex (TDD) and Frequency Division Duplexing (FDD). By introducing subbands, a base station is enabled to simultaneously receive and transmit data on a single carrier, so a single frequency band can support both ultra-low latency and large uplink transmission capacity. This expands the industrial application scope and service depth of the 5th Generation Mobile Communication Technology (5G), and meets the core production service requirements of various industries.

Currently, Physical Uplink Control Channel (PUCCH) transmission supports inter-slot frequency hopping. For one PUCCH resource, only one group of starting Physical Resource Block (PRB) and second-hop PRB (startingPRB and secondhopPRB) is configured to determine the starting PRB for PUCCH transmission during frequency hopping. However, in an SBFD system, the available uplink frequency-domain resources differ between SBFD slots/symbols and non-SBFD slots/symbols. If the PUCCH resource configuration in the related art is adopted, when a terminal performs frequency hopping between SBFD slots and non-SBFD slots, the frequency-domain position of the PUCCH may exceed the currently available uplink frequency-domain resources, resulting in PUCCH transmission failure.

### SUMMARY

The technical solutions of the present disclosure aim to provide a PUCCH transmission method and apparatus, a terminal, a network device, and a medium, so as to solve the problem that the frequency-domain position of the PUCCH exceeds the available uplink frequency-domain resources when the PUCCH resource configuration scheme in the related art is applied to an SBFD frequency-domain structure.

Some embodiments of the present disclosure provide a Physical Uplink Control Channel (PUCCH) transmission method performed by a terminal, the method includes: determining one or more transmission resources for transmitting a first PUCCH in a plurality of slots according to first information; wherein the first information includes one or more of the following:
first configuration information, wherein the first configuration information includes a first configuration and/or a second configuration; wherein the first configuration includes at least two PUCCH parameter configurations, and each of the at least two PUCCH parameter configurations include a configuration parameter group; the second configuration includes a PUCCH parameter configuration, and the PUCCH parameter configuration includes at least two configuration parameter groups; or
a type of time domain resource where transmission of the first PUCCH is located.

Optionally, each configuration parameter group includes one or more of the following parameters: a first PUCCH resource index; a first Physical Resource Block (PRB) of a PUCCH resource; a second PRB of the PUCCH resource; a frequency hopping interval; a hopping time window.

Optionally, the method further includes: obtaining Downlink Control Information (DCI) sent by a network device; wherein the DCI is configured to indicate a second PUCCH resource index; wherein determining the one or more transmission resources for transmitting the first PUCCH in the plurality of slots according to the first information includes:
determining the one or more transmission resources for transmitting the first PUCCH in the plurality of slots according to the first information and the second PUCCH resource index.

Optionally, when the first configuration information includes the first configuration, determining the one or more transmission resources for transmitting the first PUCCH according to the first information and the second PUCCH resource index includes:
when a time domain resource where N-th transmission of the first PUCCH is located is a first type, determining that a transmission resource for the N-th transmission of the first PUCCH is a first PUCCH resource, wherein the first PUCCH resource is a resource corresponding to the second PUCCH resource index in a first PUCCH parameter configuration of the first configuration; or
when a time domain resource where N-th transmission of the first PUCCH is located is a second type, determining that a transmission resource for the N-th transmission of the first PUCCH is a second PUCCH resource, wherein the second PUCCH resource is a resource corresponding to the second PUCCH resource index in a second PUCCH parameter configuration of the first configuration; wherein N is an integer greater than or equal to 1.

Optionally, when the first configuration information includes the first configuration, determining the one or more transmission resources for transmitting the first PUCCH according to the first information and the second PUCCH resource index includes one or more of the following:
when a time domain resource where first transmission of the first PUCCH is located is a first type, determining that a transmission resource for the first transmission of the first PUCCH is a first PUCCH resource, wherein the first PUCCH resource is a resource corresponding to the second PUCCH resource index in a first PUCCH parameter configuration of the first configuration;
when a time domain resource where first transmission of the first PUCCH is located is a second type, determining that a transmission resource for the first transmission of the first PUCCH is a second PUCCH resource, wherein the second PUCCH resource is a resource corresponding to the second PUCCH resource index in a second PUCCH parameter configuration of the first configuration;
when a type of a time domain resource where M-th transmission of the first PUCCH is located is the same as a type of a time domain resource for the first transmission, determining that a transmission resource for the M-th transmission of the first PUCCH is the same as the transmission resource for the first transmission;
when a type of a time domain resource where M-th transmission of the first PUCCH is located is different from a type of a time domain resource for the first transmission, determining a transmission resource associated with the transmission resource of the first transmission as the transmission resource for the M-th transmission of the first PUCCH according to an association relationship between a first PUCCH resource index in the first PUCCH parameter configuration and a first PUCCH resource index in the second PUCCH parameter configuration of the first configuration; wherein M is an integer greater than 1.

Optionally, when the first configuration information includes a first configuration, determining the one or more transmission resources for transmitting the first PUCCH according to the first information includes one or more of the following: when a transmission time unit where N-th transmission of the first PUCCH is located is an even time unit among multiple transmission time units for transmitting the first PUCCH, determining that a starting PRB for transmitting the first PUCCH is a first PRB of a PUCCH resource corresponding to the N-th transmission;
when a transmission time unit where N-th transmission of the first PUCCH is located is an odd time unit among multiple transmission time units for transmitting the first PUCCH, determining that the a starting PRB for transmitting the first PUCCH is a second PRB of a PUCCH resource corresponding to the N-th transmission; wherein N is an integer greater than or equal to 1.

Optionally, when the first configuration information includes the second configuration, determining the one or more transmission resources for transmitting the first PUCCH according to the first information includes one or more of the following: when a transmission time unit where N-th transmission of the first PUCCH is located is an even time unit among multiple transmission time units for transmitting the first PUCCH, and a time domain resource where the N-th transmission of the first PUCCH is located is a first type, determining that a starting PRB for the N-th transmission of the first PUCCH is a first PRB of a first configuration parameter group in a PUCCH resource corresponding to the N-th transmission;
when a transmission time unit where N-th transmission of the first PUCCH is located is an even time unit among multiple transmission time units for transmitting the first PUCCH, and a time domain resource where the N-th transmission of the first PUCCH is located is a second type, determining that a starting PRB for the N-th transmission of the first PUCCH is a first PRB of a second configuration parameter group in a PUCCH resource corresponding to the N-th transmission;
when a transmission time unit where N-th transmission of the first PUCCH is located is an odd time unit among multiple transmission time units for transmitting the first PUCCH, and a time domain resource where the N-th transmission of the first PUCCH is located is afirst type, determining that a starting PRB for the N-th transmission of the first PUCCH is a second PRB of a first configuration parameter group in a PUCCH resource corresponding to the N-th transmission;
when a transmission time unit where N-th transmission of the first PUCCH is located is an odd time unit among multiple transmission time units for transmitting the first PUCCH, and a time domain resource where the N-th transmission of the first PUCCH is located is a second type, determining that a starting PRB for the N-th transmission of the first PUCCH is a second PRB of a second configuration parameter group in a PUCCH resource corresponding to the N-th transmission; wherein N is an integer greater than or equal to 1.

Optionally, the method further includes:
counting the multiple transmission time units for transmitting the first PUCCH, to determine whether a transmission time unit where each transmission of the first PUCCH is transmitted is an even time unit or an odd time unit; or
counting the multiple transmission time units for transmitting the first PUCCH within a time domain resource of the first type in sequence, to determine whether a time unit where each transmission of the first PUCCH is transmitted is an even time unit or an odd time unit; and counting the multiple transmission time units for transmitting the first PUCCH within a time domain resource of the second type in sequence, to determine whether a time unit where each transmission of the first PUCCH is transmitted is an even time unit or an odd time unit.

Optionally, a first configuration parameter group in the first configuration information includes a first frequency-hopping time parameter, and a second configuration parameter group includes a second frequency-hopping time parameter; wherein the method further includes one or more of the following:
performing, for transmission of the first PUCCH, frequency hopping once every interval of the first frequency-hopping time parameter within the time domain resource of the first type;
performing, for the transmission of the first PUCCH, frequency hopping once every interval of the second frequency-hopping time parameter within the time domain resource of the second type;
performing frequency hopping once, when the time domain resource for transmission of the first PUCCH switches from the first type to the second type, or switches from the second type to the first type.

Some embodiments of the present disclosure further provide a Physical Uplink Control Channel (PUCCH) transmission method performed by a network device, the method includes: sending configured first configuration information to a terminal; wherein the first configuration information is used by the terminal to determine one or more transmission resources for transmitting a first PUCCH in a plurality of slots;
wherein the first configuration information includes one or more of the following configurations:
a first configuration, wherein the first configuration includes at least two PUCCH parameter configurations, and each of the at least two PUCCH parameter configurations includes a configuration parameter group;
a second configuration, wherein the second configuration includes a PUCCH parameter configuration, and the PUCCH parameter configuration includes at least two configuration parameter groups.

Optionally, each configuration parameter group includes one or more of the following parameters: a first PUCCH resource index; a first PRB of a PUCCH resource; a second PRB of the PUCCH resource; a frequency hopping interval; a hopping time window.

Some embodiments of the present disclosure further provide a terminal, including a processor, wherein the processor is configured to: determine one or more transmission resources for transmitting a first PUCCH in a plurality of slots according to first information; wherein the first information includes one or more of the following:
first configuration information; wherein the first configuration information includes a first configuration and/or a second configuration; wherein the first configuration includes at least two PUCCH parameter configurations, and each of the at least two PUCCH parameter configurations includes a configuration parameter group; the second configuration includes a PUCCH parameter configuration, and the PUCCH parameter configuration includes at least two configuration parameter groups;
a type of time domain resources where transmission of the first PUCCH is located.

Some embodiments of the present disclosure further provide a network device, including a transceiver, wherein the transceiver is configured to: send configured first configuration information to a terminal; wherein the first configuration information is used by the terminal to determine one or more transmission resources for transmitting a first PUCCH in a plurality of slots; wherein the first configuration information includes one or more of the following configurations:
a first configuration, wherein the first configuration includes at least two PUCCH parameter configurations, and each of the at least two PUCCH parameter configurations includes a configuration parameter group;
a second configuration, wherein the second configuration includes a PUCCH parameter configuration, and the PUCCH parameter configuration includes at least two configuration parameter groups.

Some embodiments of the present disclosure further provide a Physical Uplink Control Channel (PUCCH) transmission apparatus applied to a terminal, the apparatus includes:
a first determining module, configured to determine one or more transmission resources for transmitting a first PUCCH in a plurality of slots according to first information; wherein the first information includes one or more of the following:
first configuration information; wherein the first configuration information includes a first configuration and/or a second configuration; wherein the first configuration includes at least two PUCCH parameter configurations, and each of the at least two PUCCH parameter configurations comprises a configuration parameter group; the second configuration includes a PUCCH parameter configuration, and the PUCCH parameter configuration includes at least two configuration parameter groups;
a type of time domain resources where transmission of the first PUCCH is located.

Some embodiments of the present disclosure further provide a Physical Uplink Control Channel (PUCCH) transmission apparatus applied to a network device, the apparatus includes:
a sending module, configured to send configured first configuration information to a terminal; wherein the first configuration information is used by the terminal to determine one or more transmission resources for transmitting a first PUCCH in a plurality of slots; wherein the first configuration information includes one or more of the following configurations:
a first configuration, wherein the first configuration includes at least two PUCCH parameter configurations, and each of the at least two PUCCH parameter configurations includes a configuration parameter group;
a second configuration, wherein the second configuration includes a PUCCH parameter configuration, and the PUCCH parameter configuration includes at least two configuration parameter groups.

Some embodiments of the present disclosure further provide a terminal, including a processor, a memory, and a program stored in the memory and executable on the processor, wherein the program, when executed by the processor, implements the PUCCH transmission method according to the above.

Some embodiments of the present disclosure further provide a network device, including a processor, a memory, and a program stored in the memory and executable on the processor, wherein the program, when executed by the processor, implements the PUCCH transmission method according to the above.

Some embodiments of the present disclosure further provide a readable storage medium, wherein a program is stored on the readable storage medium, and the program, when executed by a processor, implements the steps of the PUCCH transmission method according to the above.

Some embodiments of the present disclosure further provide a computer program product, including computer instructions, wherein the computer instructions, when executed by a processor, implement the steps of the PUCCH transmission method according to the above.

At least one of the foregoing technical solutions of the present disclosure achieves the following beneficial effects:
with the PUCCH transmission methods provided in the embodiments of the present disclosure, a network device configures first configuration information for a terminal, which may include one or both of a first configuration and a second configuration. Multiple configuration parameter groups are configured for the terminal via the first configuration and/or the second configuration. The terminal can determine transmission resources for transmitting the first PUCCH according to one or more of the first configuration information and the type of time-domain resources for transmitting the first PUCCH. When transmission resources correspond to different types of time-frequency resources, different PUCCH parameter configurations or different configuration parameter groups can be adopted to determine the starting PRB. This avoids PUCCH transmission failure caused by the frequency-domain position of the PUCCH exceeding the currently available uplink frequency-domain resources when the terminal performs frequency hopping between SBFD slots and non-SBFD slots.

### BRIEF DESCRIPTION OF THE DRAWINGS

FIG. 1 is a schematic diagram of one implementation of an SBFD frequency-domain structure;
FIG. 2 is a schematic flowchart of a PUCCH transmission method according to some embodiments of the present disclosure;
FIG. 3 is a schematic flowchart of a PUCCH transmission method according to some embodiments of the present disclosure;
FIG. 4 is a schematic structural diagram of a terminal according to some embodiments of the present disclosure;
FIG. 5 is a schematic structural diagram of a network device according to some embodiments of the present disclosure;
FIG. 6 is a schematic structural diagram of a PUCCH transmission apparatus according to some embodiments of the present disclosure;
FIG. 7 is a schematic structural diagram of another PUCCH transmission apparatus according to some embodiments of the present disclosure.

### DETAILED DESCRIPTION

To make the technical problems to be solved, technical solutions, and advantages of the present disclosure clearer, detailed descriptions are provided below with reference to the accompanying drawings and specific embodiments.

Terms such as "first" and "second" used in the specification and claims of the present disclosure are intended to distinguish similar objects, and are not used to describe a specific sequence or order. It should be understood that such terms may be interchanged under appropriate circumstances, so that the embodiments of the present disclosure can be implemented in sequences other than those illustrated or described herein. In addition, objects distinguished by "first" and "second" are generally of the same type, and the number of such objects is not limited. For example, a first object may be one or multiple objects. Furthermore, the term "and/or" used in the specification and claims represents at least one of the connected objects, and the character "/" generally indicates an "or" relationship between the associated preceding and following objects.

SubBand non-overlapping Full Duplex (SBFD) combines the strengths of Time Division Duplexing (TDD) and Frequency Division Duplexing (FDD). By introducing subbands, a base station can simultaneously perform uplink reception on an Uplink (UL) subband and downlink transmission on a Downlink (DL) subband. A slot/symbol configured with subbands is referred to as a Subband Non-overlapping Full Duplex (SBFD) slot/symbol. Correspondingly, a slot/symbol without subband configuration is referred to as a non-SBFD slot/symbol.

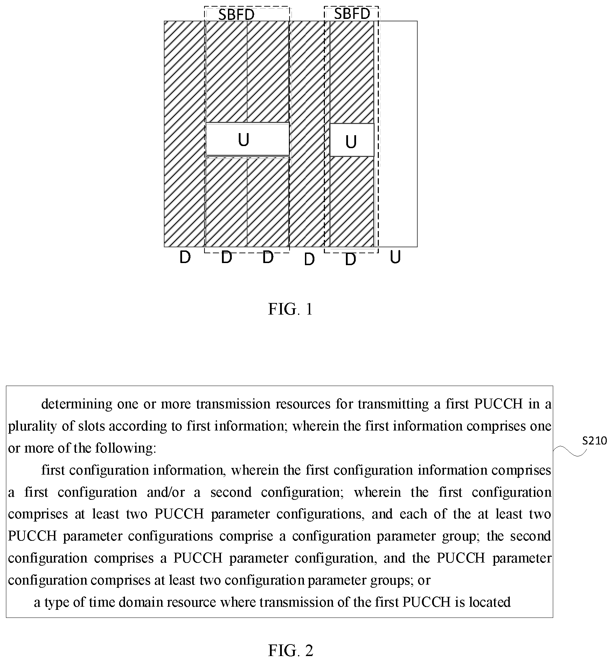

FIG. 1 is a schematic diagram of some embodiments of an SBFD frequency-domain structure. An SBFD slot/symbol includes a DL subband and a UL subband. In the related art, for one PUCCH resource, only one group of starting PRB and second-hop PRB is configured to determine the starting PRB for PUCCH transmission during frequency hopping. However, in an SBFD frequency-domain structure, the available uplink frequency-domain resources differ between SBFD slots/symbols and non-SBFD slots/symbols. If the PUCCH resource configuration scheme in the related art is adopted, when a terminal performs frequency hopping between SBFD slots and non-SBFD slots, the frequency-domain position of the PUCCH may exceed the currently available uplink frequency-domain resources, resulting in PUCCH transmission failure.

To resolve this technical problem, some embodiments of the present disclosure provide a Physical Uplink Control Channel (PUCCH) transmission method. A network device configures first configuration information for a terminal, which may include one or both of a first configuration and a second configuration. The first configuration provides at least two PUCCH parameter configurations, each of which includes one configuration parameter group, and the second configuration provides for the terminal one PUCCH parameter configuration containing at least two configuration parameter groups. Multiple configuration parameter groups are configured for the terminal via the first configuration and the second configuration, so the terminal can determine, according to one or more of the first configuration information and the type of time-domain resources for transmitting the first PUCCH, transmission resources for transmitting the first PUCCH. When transmission resources correspond to different types of time-frequency resources, different PUCCH parameter configurations or different configuration parameter groups can be adopted to determine transmission resources, which avoids PUCCH transmission failure caused by the frequency-domain position of the PUCCH exceeding the currently available uplink frequency-domain resources, when the terminal performs frequency hopping between SBFD slots and non-SBFD slots.

Some embodiments of the present disclosure provide a PUCCH transmission method executed by a terminal, as shown in FIG. 2. The method includes the following step:
S210: determining transmission resources for transmitting a first PUCCH in multiple slots according to first information, where the first information includes one or more of the following:
first configuration information, where the first configuration information includes a first configuration and/or a second configuration; the first configuration includes at least two PUCCH parameter configurations, each of which corresponds to one configuration parameter group; the second configuration includes one PUCCH parameter configuration, which includes at least two configuration parameter groups;
the type of time-domain resources for transmitting the first PUCCH.

In the embodiments of the present disclosure, optionally, the first PUCCH is any PUCCH transmitted by the terminal.

In some implementations, optionally, the first configuration information configured by the network device includes the first configuration, which includes at least two PUCCH parameter configurations, for example, a first PUCCH parameter configuration and a second PUCCH parameter configuration, each of which includes one respective configuration parameter group.

Optionally, each configuration parameter group includes one or more of the following parameters:
a first PUCCH resource index; a first PRB of the PUCCH resource; a second PRB of the PUCCH resource; a frequency hopping interval; a hopping time window.

The first PUCCH resource index is an index of a PUCCH resource configured by the network device for the terminal. The first PRB of the PUCCH resource may also be described as a starting PRB, which is used by the terminal to determine the first starting PRB for frequency hopping during transmission of the first PUCCH. The second PRB of the PUCCH resource may also be described as a second-hop PRB, which is used by the terminal to determine the second-hop PRB for frequency hopping during transmission of the first PUCCH.

Optionally, the frequency hopping interval and the hopping time window in the configuration parameter group are used by the terminal to determine the slot interval or the time window interval for frequency hopping when PUCCH Demodulation Reference Signal (DMRS) bundling is configured.

With this implementation, the first configuration configured by the network device for the terminal includes a first PUCCH parameter configuration and a second PUCCH parameter configuration. Different PUCCH parameter configurations can be adopted to determine transmission resources corresponding to different types of time-domain resources. For example, when the terminal transmits the first PUCCH over multiple slots and performs frequency hopping on odd and even slots, the first PUCCH parameter configuration may be adopted to determine transmission resources (e.g., starting PRB) for time-domain resources of the first type, and the second PUCCH parameter configuration may be adopted to determine transmission resources for time-domain resources of the second type.

In the embodiments of the present disclosure, optionally, the time-domain resources of the first type may be one of: SBFD slots/symbols and non-SBFD slots/symbols, and the time-domain resources of the second type may be the other of: SBFD slots/symbols and non-SBFD slots/symbols.

In some other implementations, optionally, the first configuration information configured by the network device includes the second configuration, which includes one PUCCH parameter configuration including at least two configuration parameter groups.

Optionally, each configuration parameter group in the one PUCCH parameter configuration of the second configuration includes one or more of the following parameters:
a first PUCCH resource index; a first PRB of the PUCCH resource; a second PRB of the PUCCH resource; a frequency hopping interval; a hopping time window.

The meanings of each parameter in the configuration parameter group are described above and will not be repeated here.

For example, the one PUCCH parameter configuration of the second configuration includes a first configuration parameter group and a second configuration parameter group. The first configuration parameter group includes a first first PRB (e.g., a first starting PRB) and a first second PRB (e.g., a first second-hop PRB) of the PUCCH resource; the second configuration parameter group includes a second first PRB (e.g., a second starting PRB) and a second second PRB (e.g., a second second-hop PRB) of the PUCCH resource; or, the first configuration parameter group includes a first frequency hopping interval, and the second configuration parameter group includes a second frequency hopping interval; or the first configuration parameter group includes a first hopping time window, and the second configuration parameter group includes a second hopping time window.

With this implementation, the second configuration configured by the network device for the terminal includes a first configuration parameter group and a second configuration parameter group. Different configuration parameter groups can be adopted to determine transmission resources corresponding to different types of time-domain resources. For example, when the terminal transmits the first PUCCH over multiple slots and performs frequency hopping on odd and even slots, the first configuration parameter group may be adopted to determine transmission resources (e.g., starting PRB) for time-domain resources of the first type, and the second configuration parameter group may be adopted to determine transmission resources for time-domain resources of the second type.

In the embodiments of the present disclosure, optionally, the method further includes: receiving Downlink Control Information (DCI) sent by the network device, where the DCI indicates a second PUCCH resource index.

Correspondingly, the step S210 of determining transmission resources for transmitting the first PUCCH over multiple slots according to the first information includes: determining the transmission resources for transmitting the first PUCCH over multiple slots according to the first information and the second PUCCH resource index.

With this implementation, the terminal determines the PUCCH resource index for transmitting the first PUCCH, according to the second PUCCH resource index indicated in the DCI sent by the network device, and determines the transmission resources for transmitting the first PUCCH over multiple slots, according to the second PUCCH resource index and the first configuration information configured by the network device.

In one implementation, when the first configuration information includes the second configuration (i.e., the network device configures only one PUCCH parameter configuration), after the terminal obtains the second PUCCH resource index indicated by the DCI, the terminal determines the PUCCH resource corresponding to the second PUCCH resource index as the transmission resource for the first PUCCH, based on the PUCCH resources configured by the first PUCCH resource index in the PUCCH parameter configuration.

In some other implementations, optionally, when the first configuration information includes the first configuration, the step of determining the one or more transmission resources for transmitting the first PUCCH according to the first information and the second PUCCH resource index includes:
if the time-domain resource for the N-th transmission of the first PUCCH is of the first type, determining that the transmission resource for the N-th transmission of the first PUCCH is the first PUCCH resource, where the first PUCCH resource is a resource corresponding to the second PUCCH resource index in the first PUCCH parameter configuration of the first configuration; or
if the time-domain resource for the N-th transmission of the first PUCCH is of the second type, determining that the transmission resource for the N-th transmission of the first PUCCH is the second PUCCH resource, where the second PUCCH resource is a resource corresponding to the second PUCCH resource index in the second PUCCH parameter configuration of the first configuration; where N is an integer greater than or equal to 1.

In the PUCCH transmission method of the present disclosure, when the first configuration information configured by the network device for the terminal includes the first configuration (i.e., including a first PUCCH parameter configuration and a second PUCCH parameter configuration), in one implementation, the terminal determines the second PUCCH resource index indicated by the network device via DCI and determines the type of time-domain resources for transmitting the first PUCCH, and adopts the PUCCH parameter configuration corresponding to this type to determine the transmission resources for transmitting the first PUCCH. For example, if the time-domain resource for transmitting the first PUCCH is of the first type, the transmission resource for transmitting the first PUCCH is determined as the resource corresponding to the second PUCCH resource index in the first PUCCH parameter configuration; if the time-domain resource for transmitting the first PUCCH is of the second type, the transmission resource for transmitting the first PUCCH is determined as the resource corresponding to the second PUCCH resource index in the second PUCCH parameter configuration.

Following the foregoing rules, for the N-th transmission of the first PUCCH, if the time-domain resource for the N-th transmission is of the first type, the transmission resource for the N-th transmission of the first PUCCH is determined as the first PUCCH resource, which is the resource corresponding to the second PUCCH resource index in the first PUCCH parameter configuration of the first configuration.

For the N-th transmission of the first PUCCH, if the time-domain resource for the N-th transmission is of the second type, the transmission resource for the N-th transmission of the first PUCCH is determined as the second PUCCH resource, which is the resource corresponding to the second PUCCH resource index in the second PUCCH parameter configuration of the first configuration; where N is an integer greater than or equal to 1.

In the embodiments of the present disclosure, optionally, the terminal determines via DCI the second PUCCH resource index indicated by the network device, and based on the second PUCCH resource index and the type of time-domain resources where the first transmission of the first PUCCH is located, determines the transmission resource for the first transmission of the first PUCCH by adopting the PUCCH parameter configuration corresponding to the type of time-domain resources . In addition, the transmission resource for the M-th transmission of the first PUCCH is determined according to the type of time-domain resources for the M-th transmission and according to the association relationship between the first PUCCH resource index in the first PUCCH parameter configuration and the first PUCCH resource index in the second PUCCH parameter configuration configured by the network device; where M is an integer greater than 1.

Specifically, based on the foregoing rules, in this implementation, when the first configuration information includes the first configuration, the step of determining the transmission resource for transmitting the first PUCCH according to the first configuration information and the second PUCCH resource index includes one or more of the following:
if the time-domain resource for the first transmission of the first PUCCH is of the first type, determining that the transmission resource for the first transmission of the first PUCCH is the first PUCCH resource, where the first PUCCH resource is a resource corresponding to the second PUCCH resource index in the first PUCCH parameter configuration of the first configuration;
if the time-domain resource for the first transmission of the first PUCCH is of the second type, determining that the transmission resource for the first transmission of the first PUCCH is the second PUCCH resource, where the second PUCCH resource is a resource corresponding to the second PUCCH resource index in the second PUCCH parameter configuration of the first configuration;
if the type of the time-domain resource for the M-th transmission of the first PUCCH is the same as the type of the time-domain resource for the first transmission, determining that the transmission resource for the M-th transmission of the first PUCCH is the same as the transmission resource for the first transmission;
if the type of the time-domain resource for the M-th transmission of the first PUCCH is different from the type of the time-domain resource for the first transmission, determining a transmission resource associated with the transmission resource for the first transmission as the transmission resource for the M-th transmission of the first PUCCH, according to an association relationship between the first PUCCH resource index in the first PUCCH parameter configuration and the first PUCCH resource index in the second PUCCH parameter configuration of the first configuration; where M is an integer greater than 1.

It should be noted that the time-domain resource for the N-th transmission of the first PUCCH can be determined according to the configuration information of the network device, so as to identify the type of the time-domain resource for the N-th transmission. In the embodiments of the present disclosure, the transmission resource for transmitting the first PUCCH over multiple slots is determined according to the second PUCCH resource index indicated in the DCI sent by the network device and the first information, the determined transmission resource is the PUCCH resource in the first PUCCH parameter configuration configured by the network device for the terminal and determined based on the second PUCCH resource index.

The foregoing manners of determining transmission resources for transmitting the first PUCCH over multiple slots according to the first information and the second PUCCH resource index are merely examples and are not limited thereto.

Based on one of the foregoing manners of determining the transmission resource (PUCCH resource) for transmitting the first PUCCH, the frequency-hopping PRB position for the first PUCCH may be determined by the PUCCH transmission method of the present disclosure, according to one or more of the determined PUCCH resource, the type of time-domain resources where the PUCCH resource is located, and the first configuration information.

If PUCCH DMRS bundling is not enabled for the terminal, the terminal repeatedly transmits the first PUCCH over multiple slots and performs frequency hopping on odd and even slots respectively. If PUCCH DMRS bundling is enabled for the terminal, the terminal repeatedly transmits the first PUCCH over multiple slots and performs frequency hopping when the frequency hopping condition is satisfied.

In the embodiments of the present disclosure, for the scenario where PUCCH DMRS bundling is not enabled for the terminal, odd and even slots are counted, and the starting PRBs for transmitting the first PUCCH on odd and even slots are determined respectively according to the determined transmission resource and the first configuration or the second configuration configured in the first configuration information.

In some implementations, when counting odd and even slots, no distinction is made between time-domain resources of the first type and time-domain resources of the second type. Specifically, the slot for the first transmission of the first PUCCH is numbered 0. All slots for transmitting the first PUCCH are counted in sequence without distinguishing whether the time-domain resource for each transmission of the first PUCCH is of the first type or the second type, so as to determine whether each slot for transmission of the first PUCCH is an even slot or an odd slot. This counting mode may be referred to as joint counting.

In some other implementations, when counting odd and even slots, time-domain resources of the first type and time-domain resources of the second type are distinguished and counted separately to determine whether each slot for transmitting the first PUCCH is an even slot or an odd slot. That is, multiple slots for transmitting the first PUCCH on time-domain resources of the first type are counted in sequence to determine whether each time unit for transmitting the first PUCCH is an even slot or an odd slot; meanwhile, multiple slots for transmitting the first PUCCH on time-domain resources of the second type are counted in sequence to determine whether each slot for transmitting the first PUCCH is an even slot or an odd slot. For example, the slot for first transmission of the PUCCH on time-domain resources of the first type is numbered 0, then slots for transmitting the first PUCCH on time-domain resources of the first type are counted in sequence. The slot for the first transmission of the PUCCH on time-domain resources of the second type is numbered 0, then slots for transmitting the first PUCCH on time-domain resources of the second type are counted in sequence. This counting mode may be referred to as separate counting.

In the embodiments of the present disclosure, a slot may also be referred to as a transmission time unit.

In the embodiments of the present disclosure, for the scenario where PUCCH DMRS bundling is not enabled for the terminal, when the first configuration information includes the first configuration (i.e., the network device configures at least two PUCCH parameter configurations for the terminal), the step of determining the transmission resource for transmitting the first PUCCH (i.e., determining the starting Physical Resource Block (PRB) for transmitting the first PUCCH) according to the first information includes one or more of the following:
if the transmission time unit (slot) for the N-th transmission of the first PUCCH is an even-numbered transmission time unit (an even slot) among multiple transmissions of the first PUCCH, determining that the starting PRB for transmitting the first PUCCH is the first PRB of the PUCCH resource corresponding to the N-th transmission;
if the transmission time unit (slot) for the N-th transmission of the first PUCCH is an odd-numbered transmission time unit (an odd slot) among multiple transmissions of the first PUCCH, determining that the starting PRB for transmitting the first PUCCH is the second PRB of the PUCCH resource corresponding to the N-th transmission; where N is an integer greater than or equal to 1.

Optionally, the first PRB may be the starting PRB in the PUCCH parameter configuration (the first PUCCH parameter configuration or the second PUCCH parameter configuration), and the second PRB may be the second-hop PRB in the PUCCH parameter configuration (the first PUCCH parameter configuration or the second PUCCH parameter configuration).

With this implementation, after the PUCCH resource for transmitting the first PUCCH is determined according to the first configuration information and the type of time-domain resources for transmitting the first PUCCH, the starting PRB for transmitting the first PUCCH on even slots and odd slots can be determined by adopting the first starting PRB and the second-hop PRB in the PUCCH parameter configuration (the first PUCCH parameter configuration or the second PUCCH parameter configuration) respectively.

Specifically, the first PUCCH parameter configuration and the second PUCCH parameter configuration each include configuration information of multiple PUCCH resources, and the configuration information of each PUCCH resource includes a first PUCCH resource index, a starting PRB, a second-hop PRB, and the like. After the PUCCH transmission resource used for transmitting the first PUCCH in a certain slot is determined according to the foregoing manners, this PUCCH transmission resource is confirmed as one PUCCH resource configured in the first PUCCH parameter configuration or the second PUCCH parameter configuration. That is, the first starting PRB and second-hop PRB corresponding to the N-th transmission of the first PUCCH are determined together with the PUCCH resource for the N-th transmission of the first PUCCH, and the starting PRB for transmitting the first PUCCH is determined according to this PUCCH resource and the corresponding first starting PRB or the second-hop PRB in the first PUCCH parameter configuration or the second PUCCH parameter configuration.

For example, if the transmission slot for the N-th transmission of the first PUCCH is an even slot, the starting PRB for transmitting the first PUCCH is determined as the first starting PRB of the corresponding PUCCH resource; if the transmission slot for the N-th transmission of the first PUCCH is an odd slot, the starting PRB for transmitting the first PUCCH is determined as the second-hop PRB of the corresponding PUCCH resource.

In another implementation of the present disclosure, the first configuration information configured by the network device for the terminal includes the second configuration, i.e., a PUCCH parameter configuration containing at least two configuration parameter groups, such as a first configuration parameter group and a second configuration parameter group. Optionally, for the scenario where PUCCH DMRS bundling is not enabled for the terminal, the first configuration parameter group includes a first first PRB (e.g., a first starting PRB) and a first second PRB (e.g., a first second-hop PRB), and the second configuration parameter group includes a second first PRB (e.g., a second starting PRB) and a second second PRB (e.g., a second second-hop PRB).

In this implementation, the step of determining the transmission resource for transmitting the first PUCCH according to the first information includes one or more of the following:
if the transmission time unit (slot) for the N-th transmission of the first PUCCH is an even-numbered transmission time unit (even-numbered slot) among multiple transmissions of the first PUCCH, and the time-domain resource for the N-th transmission of the first PUCCH is of the first type, determining that the starting PRB for the N-th transmission of the first PUCCH is the first PRB corresponding to the first configuration parameter group in the PUCCH resource corresponding to the N-th transmission;
if the transmission time unit (slot) for the N-th transmission of the first PUCCH is an even-numbered transmission time unit (even-numbered slot) among multiple transmissions of the first PUCCH, and the time-domain resource for the N-th transmission of the first PUCCH is of the second type, determining that the starting PRB for the N-th transmission of the first PUCCH is the first PRB corresponding to the second configuration parameter group in the PUCCH resource corresponding to the N-th transmission;
if the transmission time unit (slot) for the N-th transmission of the first PUCCH is an odd-numbered transmission time unit (odd-numbered slot) among multiple transmissions of the first PUCCH, and the time-domain resource for the N-th transmission of the first PUCCH is of the first type, determining that the starting PRB for the N-th transmission of the first PUCCH is the second PRB corresponding to the first configuration parameter group in the PUCCH resource corresponding to the N-th transmission;
if the transmission time unit (slot) for the N-th transmission of the first PUCCH is an odd-numbered transmission time unit (odd-numbered slot) among multiple transmissions of the first PUCCH, and the time-domain resource for the N-th transmission of the first PUCCH is of the second type, determining that the starting PRB for the N-th transmission of the first PUCCH is the second PRB corresponding to the second configuration parameter group in the PUCCH resource corresponding to the N-th transmission; where N is an integer greater than or equal to 1.

Specifically, following the foregoing rules, if the N-th transmission of the first PUCCH is performed on an even slot and the time-domain resource of this slot is of the first type, the starting PRB for the N-th transmission of the first PUCCH is the first PRB corresponding to the first configuration parameter group in the corresponding PUCCH resource; if the time-domain resource of this slot is of the second type, the starting PRB for the N-th transmission of the first PUCCH is the first PRB corresponding to the second configuration parameter group in the corresponding PUCCH resource. If the N-th transmission of the first PUCCH is performed on an even slot and the time-domain resource of this slot is of the first type, the starting PRB for the N-th transmission of the first PUCCH performed by the terminal is the second PRB corresponding to the first configuration parameter group in the corresponding PUCCH resource; if the time-domain resource of this slot is of the second type, the starting PRB for the N-th transmission of the first PUCCH performed by the terminal is the second PRB corresponding to the second configuration parameter group in the corresponding PUCCH resource.

It should be noted that the even slots and odd slots mentioned in the foregoing manners for the terminal to determine the starting PRB for transmitting the first PUCCH when the first configuration information configured by the network device for the terminal includes the first configuration or the second configuration, may be determined via joint counting or separate counting. That is, the foregoing manners for determining the starting PRB for transmitting the first PUCCH are applicable to both joint counting and separate counting.

Another implementation of the PUCCH transmission method of the present disclosure is applicable to the scenario where PUCCH DMRS bundling is enabled for the terminal. The terminal repeatedly transmits the first PUCCH over multiple slots and performs frequency hopping once when the frequency hopping condition is satisfied.

Optionally, the frequency hopping condition satisfied when the terminal repeatedly transmits the first PUCCH over multiple slots is a first condition, which includes one or more of the following:
that frequency hopping is performed every interval of the first frequency-hopping time parameter on time-domain resources of the first type;
that frequency hopping is performed every interval of the second frequency-hopping time parameter on time-domain resources of the second type;
that frequency hopping is performed when the time-domain resource for transmitting the first PUCCH switches from the first type to the second type, or from the second type to the first type.

According to the first condition, the method further includes one or more of the following operations:
performing frequency hopping of transmission of the first PUCCH once every interval of the first frequency-hopping time parameter on time-domain resources of the first type;
performing frequency hopping of transmission of the first PUCCH once every interval of the second frequency-hopping time parameter on time-domain resources of the second type;
performing frequency hopping once when the time-domain resource for transmitting the first PUCCH switches from the first type to the second type, or from the second type to the first type.

Optionally, the frequency-hopping time parameter includes a frequency hopping interval and/or a hopping time window.

With this implementation, when the first configuration information configured by the network device for the terminal includes the first configuration, the first PUCCH parameter configuration in the first configuration includes a first frequency-hopping time parameter, and the second PUCCH parameter configuration includes a second frequency-hopping time parameter. When the first configuration information configured by the network device for the terminal includes the second configuration, a PUCCH parameter configuration of the second configuration includes a first configuration parameter group and a second configuration parameter group, where the first configuration parameter group includes a first frequency-hopping time parameter and the second configuration parameter group includes a second frequency-hopping time parameter. The value of the first frequency-hopping time parameter may be the same as that of the second frequency-hopping time parameter; or if one of the first frequency-hopping time parameter and the second frequency-hopping time parameter is not configured, the value of the unconfigured parameter of the first frequency-hopping time parameter and the second frequency-hopping time parameter defaults to the value of the configured parameter of the first frequency-hopping time parameter and the second frequency-hopping time parameter. That is, if the second frequency-hopping time parameter of the first frequency-hopping time parameter and the second frequency-hopping time parameter is not configured, the value of the second frequency-hopping time parameter defaults to be equal to the value of the first frequency-hopping time parameter.

Thus, the first frequency-hopping time parameter and the second frequency-hopping time parameter can be determined according to the first configuration information configured by the network device for the terminal, and frequency hopping is performed once when the foregoing first condition is satisfied based on the first frequency-hopping time parameter and the second frequency-hopping time parameter.

In this implementation of the PUCCH transmission method of the present disclosure, when PUCCH DMRS bundling is configured for the terminal, the terminal repeatedly transmits the first PUCCH over multiple slots and performs frequency hopping at every interval of one transmission time unit. The starting Physical Resource Block (PRB) for transmitting the first PUCCH per hop is determined according to one or more of the odd/even type of the transmission time unit for transmitting the first PUCCH and the type of time-domain resources where the transmission resource is located.

Optionally, the transmission time unit may include a hopping time window, and the time length of the window is configured by the first frequency-hopping time parameter.

In some implementations of the present disclosure, no distinction is made between time-domain resources of the first type and time-domain resources of the second type, and joint counting is performed on the hopping time windows for transmitting the first PUCCH. Specifically, the first hopping time window for the terminal to transmit the first PUCCH is numbered 0. All hopping time windows for transmitting the first PUCCH are counted in sequence without distinguishing whether the hopping time window for each transmission of the first PUCCH is of the first type or the second type, so as to determine whether each hopping time window for transmitting the first PUCCH is an odd hopping time window or an even hopping time window.

In another optional implementation of the present disclosure, time-domain resources of the first type and time-domain resources of the second type are distinguished and counted separately to determine the hopping time window for each transmission of the first PUCCH. That is, multiple hopping time windows for transmitting the first PUCCH on time-domain resources of the first type are counted to determine whether a hopping time window for each transmission of the first PUCCH is an even-numbered hopping time window or an odd-numbered hopping time window; meanwhile, multiple hopping time windows for transmitting the first PUCCH on time-domain resources of the second type are counted in sequence to determine whether a hopping time window for each transmission of the first PUCCH is an even-numbered hopping time window or an odd-numbered hopping time window. For example, the hopping time window for first transmission of the PUCCH on time-domain resources of the first type is numbered 0, then multiple hopping time windows for transmitting the first PUCCH on time-domain resources of the first type are counted in sequence. The hopping time window for first transmission of the PUCCH on time-domain resources of the second type is numbered 0, then multiple hopping time windows for transmitting the first PUCCH on time-domain resources of the second type are counted in sequence.

In the embodiments of the present disclosure, for the scenario where PUCCH DMRS bundling is enabled for the terminal, when the first configuration information includes the first configuration, i.e., when the network device configures at least two PUCCH parameter configurations for the terminal, the step of determining the starting Physical Resource Block (PRB) for transmitting the first PUCCH according to the first information includes one or more of the following:
if the hopping time window for the N-th transmission of the first PUCCH is an even-numbered hopping time window among multiple transmissions of the first PUCCH, determining that the starting PRB for transmitting the first PUCCH is the first PRB of the PUCCH resource corresponding to the N-th transmission;
if the hopping time window for the N-th transmission of the first PUCCH is an odd-numbered hopping time window among multiple transmissions of the first PUCCH, determining that the starting PRB for transmitting the first PUCCH is the second PRB of the PUCCH resource corresponding to the N-th transmission; where N is an integer greater than or equal to 1.

With this implementation, after the PUCCH resource for transmitting the first PUCCH is determined according to the first configuration information and the type of time-domain resources for transmitting the first PUCCH, the starting PRB for transmitting the first PUCCH on even-numbered hopping time windows and odd-numbered hopping time windows can be determined by adopting the starting PRB and second-hop PRB in the PUCCH parameter configurations (the first PUCCH parameter configuration or the second PUCCH parameter configuration) respectively.

In another implementation of the present disclosure, the first configuration information configured by the network device for the terminal includes the second configuration, i.e., a PUCCH parameter configuration containing at least two configuration parameter groups, such as a first configuration parameter group and a second configuration parameter group. Optionally, for the scenario where PUCCH DMRS bundling is enabled for the terminal, the first configuration parameter group includes a first first PRB (e.g., a first starting PRB), a first second PRB (e.g., a first second-hop PRB), and a first frequency-hopping time parameter; the second configuration parameter group includes a second first PRB (e.g., a second starting PRB), a second second PRB (e.g., a second second-hop PRB), and a second frequency-hopping time parameter.

In this implementation, the step of determining the starting Physical Resource Block (PRB) for transmitting the first PUCCH according to the first information includes one or more of the following:
if the hopping time window for the N-th transmission of the first PUCCH is an even-numbered hopping time window among multiple transmissions of the first PUCCH, and the time-domain resource for the N-th transmission of the first PUCCH is of the first type, determining that the starting PRB for the N-th transmission of the first PUCCH is the first PRB corresponding to the first configuration parameter group in the PUCCH resource corresponding to the N-th transmission;
if the hopping time window for the N-th transmission of the first PUCCH is an even-numbered hopping time window among multiple transmissions of the first PUCCH, and the time-domain resource for the N-th transmission of the first PUCCH is of the second type, determining that the starting PRB for the N-th transmission of the first PUCCH is the first PRB corresponding to the second configuration parameter group in the PUCCH resource corresponding to the N-th transmission;
if the hopping time window for the N-th transmission of the first PUCCH is an odd-numbered hopping time window among multiple transmissions of the first PUCCH, and the time-domain resource for the N-th transmission of the first PUCCH is of the first type, determining that the starting PRB for the N-th transmission of the first PUCCH is the second PRB corresponding to the first configuration parameter group in the PUCCH resource corresponding to the N-th transmission;
if the hopping time window for the N-th transmission of the first PUCCH is an odd-numbered hopping time window among multiple transmissions of the first PUCCH, and the time-domain resource for the N-th transmission of the first PUCCH is of the second type, determining that the starting PRB for the N-th transmission of the first PUCCH is the second PRB corresponding to the second configuration parameter group in the PUCCH resource corresponding to the N-th transmission; where N is an integer greater than or equal to 1.

In the embodiments of the present disclosure, the even-numbered hopping time windows and odd-numbered hopping time windows mentioned for the scenario where PUCCH DMRS bundling is enabled for the terminal may be determined via joint counting or separate counting.

With the PUCCH transmission method provided in the embodiments of the present disclosure, multiple configuration parameter groups are configured for the terminal via the first configuration and the second configuration, which supports PUCCH frequency hopping under different available uplink resources in an SBFD system and avoids PUCCH transmission failure caused by the frequency-domain position of the PUCCH exceeding the currently available uplink frequency-domain resources when the terminal performs frequency hopping between SBFD slots and non-SBFD slots.

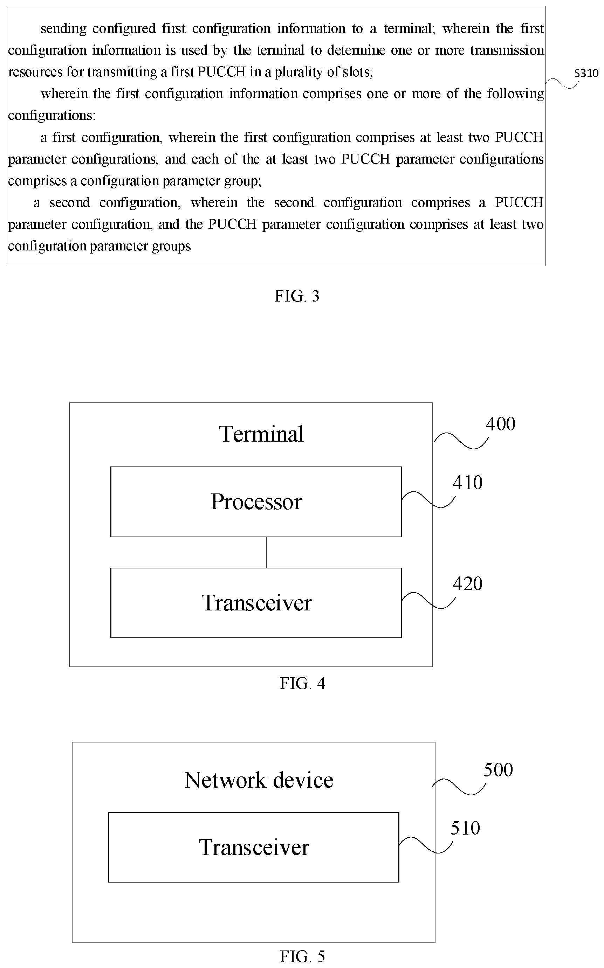

Some embodiments of the present disclosure provide a Physical Uplink Control Channel (PUCCH) transmission method executed by a network device, as shown in FIG. 3. The method includes the following step:
S310: sending configured first configuration information to a terminal, where the first configuration information is used by the terminal to determine transmission resources for transmitting a first PUCCH over multiple slots.

The first configuration information includes one or more of the following configurations:
a first configuration, including at least two PUCCH parameter configurations, each of which includes one configuration parameter group;
a second configuration, including one PUCCH parameter configuration, which includes at least two configuration parameter groups.

With the PUCCH transmission method of this embodiment, a network device configures first configuration information for a terminal, which may include one or both of a first configuration and a second configuration. Multiple configuration parameter groups are configured for the terminal via the first configuration and/or the second configuration. The terminal can determine transmission resources for transmitting the first PUCCH according to one or more of the first configuration information, transmission resources, and the type of time-domain resources where the transmission resources are located. When transmission resources for transmitting the first PUCCH are different types of time-frequency resources, different PUCCH parameter configurations or different configuration parameter groups can be adopted to determine transmission resources, which avoids PUCCH transmission failure caused by the frequency-domain position of the PUCCH exceeding the currently available uplink frequency-domain resources when the terminal performs frequency hopping between SBFD slots and non-SBFD slots.

Optionally, in the PUCCH transmission method, each configuration parameter group includes one or more of the following parameters:
a first PUCCH resource index; a first PRB of the PUCCH resource; a second PRB of the PUCCH resource; a frequency hopping interval; a hopping time window.

For the specific implementations of the PUCCH transmission method executed by the network device in the embodiments of the present disclosure, reference may be made to the detailed descriptions of the implementations executed by the terminal, which will not be repeated herein.

Some embodiments of the present disclosure provide a terminal, as shown in FIG. 4. The terminal 400 includes a processor 410 and a transceiver 420. The processor 410 is configured to: determine transmission resources for transmitting a first PUCCH over multiple slots according to first information, where the first information includes one or more of the following:
first configuration information, where the first configuration information includes a first configuration and/or a second configuration; the first configuration includes at least two PUCCH parameter configurations, each of which includes one configuration parameter group; the second configuration includes one PUCCH parameter configuration, which includes at least two configuration parameter groups;
the type of time-domain resources for transmitting the first PUCCH.

Optionally, in the terminal, each configuration parameter group includes one or more of the following parameters: a first PUCCH resource index; a first PRB of the PUCCH resource; a second PRB of the PUCCH resource; a frequency hopping interval; a hopping time window.

Optionally, in the terminal, the transceiver 420 is configured to: receive Downlink Control Information (DCI) sent by the network device, where the DCI indicates a second PUCCH resource index.

Correspondingly, the step for the processor 410 to determine transmission resources for transmitting the first PUCCH over multiple slots according to the first information includes: determining the transmission resources for transmitting the first PUCCH over multiple slots according to the first information and the second PUCCH resource index.

Optionally, in the terminal, when the first configuration information includes the first configuration, the step for the processor 410 to determine the transmission resources for transmitting the first PUCCH according to the first information and the second PUCCH resource index includes:
if the time-domain resource for the N-th transmission of the first PUCCH is of the first type, determining that the transmission resource for the N-th transmission of the first PUCCH is the first PUCCH resource, where the first PUCCH resource is a resource corresponding to the second PUCCH resource index in the first PUCCH parameter configuration of the first configuration; or
if the time-domain resource for the N-th transmission of the first PUCCH is of the second type, determining that the transmission resource for the N-th transmission of the first PUCCH is the second PUCCH resource, where the second PUCCH resource is a resource corresponding to the second PUCCH resource index in the second PUCCH parameter configuration of the first configuration; where N is an integer greater than or equal to 1.

Optionally, in the terminal, when the first configuration information includes the first configuration, the step for the processor 410 to determine the transmission resources for transmitting the first PUCCH according to the first information and the second PUCCH resource index includes one or more of the following:
if the time-domain resource for the first transmission of the first PUCCH is of the first type, determining that the transmission resource for the first transmission of the first PUCCH is the first PUCCH resource, where the first PUCCH resource is a resource corresponding to the second PUCCH resource index in the first PUCCH parameter configuration of the first configuration;
if the time-domain resource for the first transmission of the first PUCCH is of the second type, determining that the transmission resource for the first transmission of the first PUCCH is the second PUCCH resource, where the second PUCCH resource is a resource corresponding to the second PUCCH resource index in the second PUCCH parameter configuration of the first configuration;
if the type of the time-domain resource for the M-th transmission of the first PUCCH is the same as the type of the time-domain resource for the first transmission, determining that the transmission resource for the M-th transmission of the first PUCCH is the same as the transmission resource for the first transmission;
if the type of the time-domain resource for the M-th transmission of the first PUCCH is different from the type of the time-domain resource for the first transmission, determining a transmission resource associated with the transmission resource for the first transmission as the transmission resource for the M-th transmission of the first PUCCH according to an association relationship between the first PUCCH resource index in the first PUCCH parameter configuration and the first PUCCH resource index in the second PUCCH parameter configuration of the first configuration; where M is an integer greater than 1.

Optionally, in the terminal, when the first configuration information includes the first configuration, the step for the processor 410 to determine the transmission resources for transmitting the first PUCCH according to the first information includes one or more of the following:
if the transmission time unit for the N-th transmission of the first PUCCH is an even-numbered transmission time unit among multiple transmissions of the first PUCCH, determining that the starting PRB for transmitting the first PUCCH is the first PRB of the PUCCH resource corresponding to the N-th transmission;
if the transmission time unit for the N-th transmission of the first PUCCH is an odd-numbered transmission time unit among multiple transmissions of the first PUCCH, determining that the starting PRB for transmitting the first PUCCH is the second PRB of the PUCCH resource corresponding to the N-th transmission; where N is an integer greater than or equal to 1.

Optionally, in the terminal, when the first configuration information includes the second configuration, the step of determining the transmission resources for transmitting the first PUCCH according to the first information includes one or more of the following:
if the transmission time unit for the N-th transmission of the first PUCCH is an even-numbered transmission time unit among multiple transmissions of the first PUCCH, and the time-domain resource for the N-th transmission of the first PUCCH is of the first type, determining that the starting PRB for the N-th transmission of the first PUCCH is the first PRB corresponding to the first configuration parameter group in the PUCCH resource corresponding to the N-th transmission;
if the transmission time unit for the N-th transmission of the first PUCCH is an even-numbered transmission time unit among multiple transmissions of the first PUCCH, and the time-domain resource for the N-th transmission of the first PUCCH is of the second type, determining that the starting PRB for the N-th transmission of the first PUCCH is the first PRB corresponding to the second configuration parameter group in the PUCCH resource corresponding to the N-th transmission;
if the transmission time unit for the N-th transmission of the first PUCCH is an odd-numbered transmission time unit among multiple transmissions of the first PUCCH, and the time-domain resource for the N-th transmission of the first PUCCH is of the first type, determining that the starting PRB for the N-th transmission of the first PUCCH is the second PRB corresponding to the first configuration parameter group in the PUCCH resource corresponding to the N-th transmission;
if the transmission time unit for the N-th transmission of the first PUCCH is an odd-numbered transmission time unit among multiple transmissions of the first PUCCH, and the time-domain resource for the N-th transmission of the first PUCCH is of the second type, determining that the starting PRB for the N-th transmission of the first PUCCH is the second PRB corresponding to the second configuration parameter group in the PUCCH resource corresponding to the N-th transmission; where N is an integer greater than or equal to 1.

Optionally, in the terminal, the processor 410 is further configured to: count multiple transmission time units for transmitting the first PUCCH in sequence, to determine whether a transmission time unit for each transmission of the first PUCCH is an even-numbered time unit or an odd-numbered time unit; or count multiple transmission time units for transmitting the first PUCCH on time-domain resources of the first type in sequence, to determine whether a time unit for each transmission of the first PUCCH is an even-numbered time unit or an odd-numbered time unit; and count multiple transmission time units for transmitting the first PUCCH on time-domain resources of the second type in sequence, to determine whether a time unit for each transmission of the first PUCCH is an even-numbered time unit or an odd-numbered time unit.

Optionally, in the terminal, the first configuration parameter group in the first configuration information includes a first frequency-hopping time parameter, and the second configuration parameter group includes a second frequency-hopping time parameter.

Correspondingly, the processor 410 is further configured to perform one or more of the following operations:
performing frequency hopping of transmission of the first PUCCH once every interval of the first frequency-hopping time parameter on time-domain resources of the first type;
performing frequency hopping of transmission of the first PUCCH once every interval of the second frequency-hopping time parameter on time-domain resources of the second type;
performing frequency hopping once when the time-domain resource for transmitting the first PUCCH switches from the first type to the second type, or from the second type to the first type.

Some embodiments of the present disclosure provide a network device, as shown in FIG. 5. The network device 500 includes a transceiver 510. The transceiver 510 is configured to: send configured first configuration information to a terminal, where the first configuration information is used by the terminal to determine transmission resources for transmitting a first PUCCH over multiple slots.

The first configuration information includes one or more of the following configurations:
a first configuration, including at least two PUCCH parameter configurations, each of which includes one configuration parameter group;
a second configuration, including one PUCCH parameter configuration, which includes at least two configuration parameter groups.

Optionally, in the network device, each configuration parameter group includes one or more of the following parameters:
a first PUCCH resource index; a first PRB of the PUCCH resource; a second PRB of the PUCCH resource; a frequency hopping interval; a hopping time window.

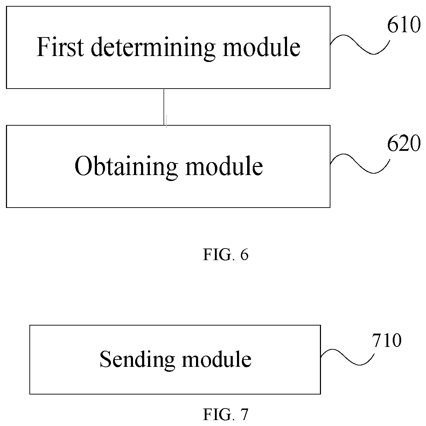

Some embodiments of the present disclosure further provide a Physical Uplink Control Channel (PUCCH) transmission apparatus applied to a terminal, as shown in FIG. 6. The apparatus includes: a first determining module 610, configured to determine transmission resources for transmitting a first PUCCH in a plurality of slots according to first information; where the first information includes one or more of the following:
first configuration information; wherein the first configuration information includes a first configuration and/or a second configuration; where the first configuration comprises at least two PUCCH parameter configurations, and each of the at least two PUCCH parameter configurations includes one configuration parameter group; the second configuration comprises one PUCCH parameter configuration, and the one PUCCH parameter configuration includes at least two configuration parameter groups;
a type of time domain resource where the transmission of the first PUCCH is located.

Optionally, in the PUCCH transmission apparatus, each configuration parameter group includes one or more of the following parameters:
a first PUCCH resource index; a first Physical Resource Block (PRB) of the PUCCH resource; a second PRB of the PUCCH resource; a frequency hopping interval; a hopping time window.

Optionally, the PUCCH transmission apparatus further includes:
an obtaining module 620, configured to obtain Downlink Control Information (DCI) sent by a network device; where the DCI indicates a second PUCCH resource index;
where determining by the first determining module 610 the transmission resources for transmitting the first PUCCH in the plurality of slots according to the first information specifically includes:
   determining the transmission resources for transmitting the first PUCCH in the plurality of slots according to the first information and the second PUCCH resource index.

Optionally, in the PUCCH transmission apparatus, when the first configuration information includes the first configuration, determining by the first determining module 610 the transmission resources for transmitting the first PUCCH according to the first information and the second PUCCH resource index includes:
when a time domain resource where the N-th transmission of the first PUCCH is located is of a first type, determining that the transmission resource for the N-th transmission of the first PUCCH is a first PUCCH resource, where the first PUCCH resource is a resource corresponding to the second PUCCH resource index in a first PUCCH parameter configuration of the first configuration; or
when a time domain resource where the N-th transmission of the first PUCCH is located is of a second type, determining that the transmission resource for the N-th transmission of the first PUCCH is a second PUCCH resource, where the second PUCCH resource is a resource corresponding to the second PUCCH resource index in a second PUCCH parameter configuration of the first configuration; where N is an integer greater than or equal to 1.

Optionally, in the PUCCH transmission apparatus, when the first configuration information includes the first configuration, determining by the first determining module 610 the transmission resources for transmitting the first PUCCH according to the first information and the second PUCCH resource index includes one or more of the following operations:
when a time domain resource where the first transmission of the first PUCCH is located is of the first type, determining that the transmission resource for the first transmission of the first PUCCH is the first PUCCH resource, where the first PUCCH resource is the resource corresponding to the second PUCCH resource index in the first PUCCH parameter configuration of the first configuration;
when a time domain resource where the first transmission of the first PUCCH is located is of the second type, determining that the transmission resource for the first transmission of the first PUCCH is the second PUCCH resource, where the second PUCCH resource is the resource corresponding to the second PUCCH resource index in the second PUCCH parameter configuration of the first configuration;
when a type of a time domain resource where the M-th transmission of the first PUCCH is located is the same as the type of the time domain resource for the first transmission, determining that the transmission resource for the M-th transmission of the first PUCCH is identical to the transmission resource for the first transmission;
when a type of a time domain resource where the M-th transmission of the first PUCCH is located is different from the type of the time domain resource for the first transmission, determining a transmission resource associated with the transmission resource of the first transmission as the transmission resource for the M-th transmission of the first PUCCH according to an association relationship between a first PUCCH resource index in the first PUCCH parameter configuration and a first PUCCH resource index in the second PUCCH parameter configuration of the first configuration; where M is an integer greater than 1.

Optionally, in the PUCCH transmission apparatus, when the first configuration information includes the first configuration, determining by the first determining module 610 the transmission resources for transmitting the first PUCCH according to the first information includes one or more of the following operations:
when a transmission time unit where the N-th transmission of the first PUCCH is located is an even time unit among multiple transmission time units for transmitting the first PUCCH, determining that a starting PRB for transmitting the first PUCCH is the first PRB of the PUCCH resource corresponding to the N-th transmission;
when a transmission time unit where the N-th transmission of the first PUCCH is located is an odd time unit among multiple transmission time units for transmitting the first PUCCH, determining that the starting PRB for transmitting the first PUCCH is the second PRB of the PUCCH resource corresponding to the N-th transmission; where N is an integer greater than or equal to 1.

Optionally, in the PUCCH transmission apparatus, when the first configuration information includes the second configuration, determining the transmission resources for transmitting the first PUCCH according to the first information includes one or more of the following operations:
when a transmission time unit where the N-th transmission of the first PUCCH is located is an even time unit among multiple transmission time units for transmitting the first PUCCH, and the time domain resource where the N-th transmission of the first PUCCH is located is of the first type, determining that the starting PRB for the N-th transmission of the first PUCCH is the first PRB of a first configuration parameter group in the PUCCH resource corresponding to the N-th transmission;
when a transmission time unit where the N-th transmission of the first PUCCH is located is an even time unit among multiple transmission time units for transmitting the first PUCCH, and the time domain resource where the N-th transmission of the first PUCCH is located is of the second type, determining that the starting PRB for the N-th transmission of the first PUCCH is the first PRB of a second configuration parameter group in the PUCCH resource corresponding to the N-th transmission;
when a transmission time unit where the N-th transmission of the first PUCCH is located is an odd time unit among multiple transmission time units for transmitting the first PUCCH, and the time domain resource where the N-th transmission of the first PUCCH is located is the first type, determining that the starting PRB for the N-th transmission of the first PUCCH is the second PRB of the first configuration parameter group in the PUCCH resource corresponding to the N-th transmission;
when a transmission time unit where the N-th transmission of the first PUCCH is located is an odd time unit among multiple transmission time units for transmitting the first PUCCH, and the time domain resource where the N-th transmission of the first PUCCH is located is of the second type, determining that the starting PRB for the N-th transmission of the first PUCCH is the second PRB of the second configuration parameter group in the PUCCH resource corresponding to the N-th transmission; where N is an integer greater than or equal to 1.

Optionally, in the PUCCH transmission apparatus, the second determining module 620 is further configured to:
count the multiple transmission time units for transmitting the first PUCCH in sequence, to determine whether a transmission time unit for each transmission of the first PUCCH is an even time unit or an odd time unit; or
count the multiple transmission time units for transmitting the first PUCCH within time domain resources of the first type in sequence, to determine whether a time unit for each transmission of the first PUCCH is an even time unit or an odd time unit; and count the multiple transmission time units for transmitting the first PUCCH within time domain resources of the second type in sequence, to determine whether a time unit for each transmission of the first PUCCH is an even time unit or an odd time unit.

Optionally, in the PUCCH transmission apparatus, a first configuration parameter group in the first configuration information includes a first frequency-hopping time parameter, and a second configuration parameter group includes a second frequency-hopping time parameter; the first determining module 610 is further configured to perform one or more of the following operations:
performing frequency hopping for the transmission of the first PUCCH once every interval of the first frequency-hopping time parameter within time domain resources of the first type;
performing frequency hopping for the transmission of the first PUCCH once every interval of the second frequency-hopping time parameter within time domain resources of the second type;
performing frequency hopping once when the time domain resource for transmitting the first PUCCH switches from the first type to the second type, or switches from the second type to the first type.

Some embodiments of the present disclosure further provide a PUCCH transmission apparatus applied to a network device, as shown in FIG. 7. The apparatus includes: a sending module 710, configured to send configured first configuration information to a terminal; wherein the first configuration information is used by the terminal to determine transmission resources for transmitting the first PUCCH in the plurality of slots; where the first configuration information includes one or more of the following configurations:
the first configuration, which includes at least two PUCCH parameter configurations, and each of the at least two PUCCH parameter configurations includes one configuration parameter group;
the second configuration, which includes one PUCCH parameter configuration, and the one PUCCH parameter configuration includes at least two configuration parameter groups.

Some embodiments of the present disclosure further provide a terminal, which includes a processor, a memory, and a program stored in the memory and executable on the processor. when executed by the processor, the program implements any of the above PUCCH transmission methods.

For the specific implementation of the PUCCH transmission method executed by the program running on the processor of the terminal, reference may be made to the detailed description of the PUCCH transmission method applied to the terminal, which will not be repeated herein.

Some embodiments of the present disclosure further provide a network device, which includes a processor, a memory, and a program stored in the memory and executable on the processor. when executed by the processor, the program implements any of the above PUCCH transmission methods.

For the specific implementation of the PUCCH transmission method executed by the program running on the processor of the network device, reference may be made to the detailed description of the PUCCH transmission method applied to the network device, which will not be repeated herein.

In addition, some embodiments of the present disclosure further provide a readable storage medium, where a computer program is stored. when executed by a processor, the program implements the steps of any of the above methods.

Specifically, the readable storage medium is applied to the above terminal or network device, and the corresponding steps of the PUCCH transmission method when applied to the terminal or network device are as described in detail above, which will not be repeated herein.

Some embodiments of the present disclosure further provide a computer program product, which includes computer instructions. When the instructions are executed by a processor, the processor implements the steps of any of the above PUCCH transmission methods.

Optionally, the embodiments of the present disclosure may be implemented in the form of a computer program product containing computer-usable program codes on one or more computer-usable storage media (including but not limited to disk storage, Compact Disc Read-Only Memory (CD-ROM), optical storage, etc.).

The computer instructions included in the computer program product of the embodiments of the present disclosure implement each process of the method embodiments shown in FIG. 2 to FIG. 3 when executed by a processor, and can achieve the same technical effects, which will not be repeated to avoid redundancy.

It should be understood that the disclosed methods and apparatuses may be implemented in other manners in the several embodiments provided in the present disclosure. for example, the division of the units described above is merely a logical function division, and there may be other division manners in actual implementation. for example, multiple units or components may be combined or integrated into another system, or some features may be omitted or not executed. In addition, the displayed or discussed mutual coupling, direct coupling or communication connection may be indirect coupling or communication connection through some interfaces, apparatuses or units, and may be electrical, mechanical or other forms.

In addition, each functional unit in each embodiment of the present disclosure may be integrated into one processing unit, each unit may exist physically alone, or two or more units may be integrated into one unit. the above integrated units may be implemented in the form of hardware, or in the form of hardware plus software functional units.

The above integrated units implemented in the form of software functional units may be stored in a computer-readable storage medium. the software functional units stored in the storage medium include several instructions for enabling a computer device (which may be a personal computer, a server, a network device, etc.) to execute part of the steps of the transceiving methods described in each embodiment of the present disclosure. the aforementioned storage medium includes various media capable of storing program codes such as a USB flash drive, a mobile hard disk, a Read-Only Memory (ROM), a Random Access Memory (RAM), a magnetic disk or an optical disk.

The above are the preferred implementation manners of the present disclosure. it should be pointed out that for those skilled in the art, several improvements and modifications may be made without departing from the principle of the present disclosure, and such improvements and modifications shall also fall within the protection scope of the present disclosure.

## Claims

1. A Physical Uplink Control Channel (PUCCH) transmission method performed by a terminal, the method comprising:
determining one or more transmission resources for transmitting a first PUCCH in a plurality of slots according to first information; wherein the first information comprises one or more of the following:
first configuration information, wherein the first configuration information comprises a first configuration and/or a second configuration; wherein the first configuration comprises at least two PUCCH parameter configurations, and each of the at least two PUCCH parameter configurations comprise a configuration parameter group; the second configuration comprises a PUCCH parameter configuration, and the PUCCH parameter configuration comprises at least two configuration parameter groups; or
a type of time domain resource where transmission of the first PUCCH is located.

2. The PUCCH transmission method according to claim 1, wherein each configuration parameter group comprises one or more of the following parameters:
a first PUCCH resource index;
a first Physical Resource Block (PRB) of a PUCCH resource;
a second PRB of the PUCCH resource;
a frequency hopping interval;
a hopping time window.

3. The PUCCH transmission method according to claim 1, further comprising:
obtaining Downlink Control Information (DCI) sent by a network device; wherein the DCI is configured to indicate a second PUCCH resource index;
wherein determining the one or more transmission resources for transmitting the first PUCCH in the plurality of slots according to the first information comprises:
determining the one or more transmission resources for transmitting the first PUCCH in the plurality of slots according to the first information and the second PUCCH resource index.

4. The PUCCH transmission method according to claim 3, wherein when the first configuration information comprises the first configuration, determining the one or more transmission resources for transmitting the first PUCCH according to the first information and the second PUCCH resource index comprises:
when a time domain resource where N-th transmission of the first PUCCH is located is a first type, determining that a transmission resource for the N-th transmission of the first PUCCH is a first PUCCH resource, wherein the first PUCCH resource is a resource corresponding to the second PUCCH resource index in a first PUCCH parameter configuration of the first configuration; or
when a time domain resource where N-th transmission of the first PUCCH is located is a second type, determining that a transmission resource for the N-th transmission of the first PUCCH is a second PUCCH resource, wherein the second PUCCH resource is a resource corresponding to the second PUCCH resource index in a second PUCCH parameter configuration of the first configuration; wherein N is an integer greater than or equal to 1.

5. The PUCCH transmission method according to claim 3, wherein when the first configuration information comprises the first configuration, determining the one or more transmission resources for transmitting the first PUCCH according to the first information and the second PUCCH resource index comprises one or more of the following:
when a time domain resource where first transmission of the first PUCCH is located is a first type, determining that a transmission resource for the first transmission of the first PUCCH is a first PUCCH resource, wherein the first PUCCH resource is a resource corresponding to the second PUCCH resource index in a first PUCCH parameter configuration of the first configuration;
when a time domain resource where first transmission of the first PUCCH is located is a second type, determining that a transmission resource for the first transmission of the first PUCCH is a second PUCCH resource, wherein the second PUCCH resource is a resource corresponding to the second PUCCH resource index in a second PUCCH parameter configuration of the first configuration;
when a type of a time domain resource where M-th transmission of the first PUCCH is located is the same as a type of a time domain resource for the first transmission, determining that a transmission resource for the M-th transmission of the first PUCCH is the same as the transmission resource for the first transmission;
when a type of a time domain resource where M-th transmission of the first PUCCH is located is different from a type of a time domain resource for the first transmission, determining a transmission resource associated with the transmission resource of the first transmission as the transmission resource for the M-th transmission of the first PUCCH according to an association relationship between a first PUCCH resource index in the first PUCCH parameter configuration and a first PUCCH resource index in the second PUCCH parameter configuration of the first configuration; wherein M is an integer greater than 1.

6. The PUCCH transmission method according to claim 1 or 3, wherein when the first configuration information comprises a first configuration, determining the one or more transmission resources for transmitting the first PUCCH according to the first information comprises one or more of the following:
when a transmission time unit where N-th transmission of the first PUCCH is located is an even time unit among multiple transmission time units for transmitting the first PUCCH, determining that a starting PRB for transmitting the first PUCCH is a first PRB of a PUCCH resource corresponding to the N-th transmission;
when a transmission time unit where N-th transmission of the first PUCCH is located is an odd time unit among multiple transmission time units for transmitting the first PUCCH, determining that the a starting PRB for transmitting the first PUCCH is a second PRB of a PUCCH resource corresponding to the N-th transmission; wherein N is an integer greater than or equal to 1.

7. The PUCCH transmission method according to claim 1 or 3, wherein when the first configuration information comprises the second configuration, determining the one or more transmission resources for transmitting the first PUCCH according to the first information comprises one or more of the following:
when a transmission time unit where N-th transmission of the first PUCCH is located is an even time unit among multiple transmission time units for transmitting the first PUCCH, and a time domain resource where the N-th transmission of the first PUCCH is located is a first type, determining that a starting PRB for the N-th transmission of the first PUCCH is a first PRB of a first configuration parameter group in a PUCCH resource corresponding to the N-th transmission;
when a transmission time unit where N-th transmission of the first PUCCH is located is an even time unit among multiple transmission time units for transmitting the first PUCCH, and a time domain resource where the N-th transmission of the first PUCCH is located is a second type, determining that a starting PRB for the N-th transmission of the first PUCCH is a first PRB of a second configuration parameter group in a PUCCH resource corresponding to the N-th transmission;
when a transmission time unit where N-th transmission of the first PUCCH is located is an odd time unit among multiple transmission time units for transmitting the first PUCCH, and a time domain resource where the N-th transmission of the first PUCCH is located is afirst type, determining that a starting PRB for the N-th transmission of the first PUCCH is a second PRB of a first configuration parameter group in a PUCCH resource corresponding to the N-th transmission;
when a transmission time unit where N-th transmission of the first PUCCH is located is an odd time unit among multiple transmission time units for transmitting the first PUCCH, and a time domain resource where the N-th transmission of the first PUCCH is located is a second type, determining that a starting PRB for the N-th transmission of the first PUCCH is a second PRB of a second configuration parameter group in a PUCCH resource corresponding to the N-th transmission; wherein N is an integer greater than or equal to 1.

8. The PUCCH transmission method according to claim 6 or 7, further comprising:
counting the multiple transmission time units for transmitting the first PUCCH, to determine whether a transmission time unit where each transmission of the first PUCCH is transmitted is an even time unit or an odd time unit; or
counting the multiple transmission time units for transmitting the first PUCCH within a time domain resource of the first type in sequence, to determine whether a time unit where each transmission of the first PUCCH is transmitted is an even time unit or an odd time unit; and counting the multiple transmission time units for transmitting the first PUCCH within a time domain resource of the second type in sequence, to determine whether a time unit where each transmission of the first PUCCH is transmitted is an even time unit or an odd time unit.

9. The PUCCH transmission method according to claim 1, wherein a first configuration parameter group in the first configuration information comprises a first frequency-hopping time parameter, and a second configuration parameter group comprises a second frequency-hopping time parameter;
wherein the method further comprises one or more of the following:
performing, for transmission of the first PUCCH, frequency hopping once every interval of the first frequency-hopping time parameter within the time domain resource of the first type;
performing, for the transmission of the first PUCCH, frequency hopping once every interval of the second frequency-hopping time parameter within the time domain resource of the second type;
performing frequency hopping once, when the time domain resource for transmission of the first PUCCH switches from the first type to the second type, or switches from the second type to the first type.

10. A Physical Uplink Control Channel (PUCCH) transmission method performed by a network device, the method comprising:
sending configured first configuration information to a terminal; wherein the first configuration information is used by the terminal to determine one or more transmission resources for transmitting a first PUCCH in a plurality of slots;
wherein the first configuration information comprises one or more of the following configurations:
a first configuration, wherein the first configuration comprises at least two PUCCH parameter configurations, and each of the at least two PUCCH parameter configurations comprises a configuration parameter group;
a second configuration, wherein the second configuration comprises a PUCCH parameter configuration, and the PUCCH parameter configuration comprises at least two configuration parameter groups.

11. The PUCCH transmission method according to claim 10, wherein each configuration parameter group comprises one or more of the following parameters:
a first PUCCH resource index;
a first PRB of a PUCCH resource;
a second PRB of the PUCCH resource;
a frequency hopping interval;
a hopping time window.

12. A terminal, comprising a processor, wherein the processor is configured to:
determine one or more transmission resources for transmitting a first PUCCH in a plurality of slots according to first information; wherein the first information comprises one or more of the following:
first configuration information; wherein the first configuration information comprises a first configuration and/or a second configuration; wherein the first configuration comprises at least two PUCCH parameter configurations, and each of the at least two PUCCH parameter configurations comprises a configuration parameter group; the second configuration comprises a PUCCH parameter configuration, and the PUCCH parameter configuration comprises at least two configuration parameter groups;
a type of time domain resources where transmission of the first PUCCH is located.

13. A network device, comprising a transceiver, wherein the transceiver is configured to:
send configured first configuration information to a terminal; wherein the first configuration information is used by the terminal to determine one or more transmission resources for transmitting a first PUCCH in a plurality of slots;
wherein the first configuration information comprises one or more of the following configurations:
a first configuration, wherein the first configuration comprises at least two PUCCH parameter configurations, and each of the at least two PUCCH parameter configurations comprises a configuration parameter group;
a second configuration, wherein the second configuration comprises a PUCCH parameter configuration, and the PUCCH parameter configuration comprises at least two configuration parameter groups.

14. A Physical Uplink Control Channel (PUCCH) transmission apparatus applied to a terminal, the apparatus comprising:
a first determining module, configured to determine one or more transmission resources for transmitting a first PUCCH in a plurality of slots according to first information; wherein the first information comprises one or more of the following:
first configuration information; wherein the first configuration information comprises a first configuration and/or a second configuration; wherein the first configuration comprises at least two PUCCH parameter configurations, and each of the at least two PUCCH parameter configurations comprises a configuration parameter group; the second configuration comprises a PUCCH parameter configuration, and the PUCCH parameter configuration comprises at least two configuration parameter groups;
a type of time domain resources where transmission of the first PUCCH is located.

15. A Physical Uplink Control Channel (PUCCH) transmission apparatus applied to a network device, the apparatus comprising:
a sending module, configured to send configured first configuration information to a terminal; wherein the first configuration information is used by the terminal to determine one or more transmission resources for transmitting a first PUCCH in a plurality of slots;
wherein the first configuration information comprises one or more of the following configurations:
a first configuration, wherein the first configuration comprises at least two PUCCH parameter configurations, and each of the at least two PUCCH parameter configurations comprises a configuration parameter group;
a second configuration, wherein the second configuration comprises a PUCCH parameter configuration, and the PUCCH parameter configuration comprises at least two configuration parameter groups.

16. A terminal, comprising a processor, a memory, and a program stored in the memory and executable on the processor, wherein the program, when executed by the processor, implements the PUCCH transmission method according to any one of claims 1 to 9.

17. A network device, comprising a processor, a memory, and a program stored in the memory and executable on the processor, wherein the program, when executed by the processor, implements the PUCCH transmission method according to any one of claims 10 to 11.

18. A readable storage medium, wherein a program is stored on the readable storage medium, and the program, when executed by a processor, implements the steps of the PUCCH transmission method according to any one of claims 1 to 9, or implements the steps of the PUCCH transmission method according to any one of claims 10 to 11.

19. A computer program product, comprising computer instructions, wherein the computer instructions, when executed by a processor, implement the steps of the PUCCH transmission method according to any one of claims 1 to 11.
